# FASCICULE DE BREVET EUROPEEN

(11) **EP 2 960 593 B1**
(45) Date de publication et mention de la délivrance du brevet: **30.09.2020**
(21) Numéro de dépôt: 15173859.8
(22) Date de dépôt: 25.06.2015
(51) Int. Cl.: F26B 23/02, F24H 3/08, F24H 3/12, F24D 12/02, F26B 21/00, F28D 21/00

(54) **SYSTÈME DE CHAUFFAGE D'UN FLUX DE GAZ ET INSTALLATION EMPLOYANT LEDIT SYSTÈME**
HEIZSYSTEM EINES GASFLUSSES, UND ANLAGE, DIE DIESES SYSTEM ANWENDET
SYSTEM FOR HEATING A GAS FLOW AND INSTALLATION USING SUCH A SYSTEM

(30) Priorité: 26.06.2014 FR 1456015
(43) Date de publication de la demande: 30.12.2015
(73) Titulaire: PLDF, 22400 Lamballe (FR)
(72) Inventeur: LE DU, Patrice, 56100 LORIENT (FR); MADEC, Yannick, 22400 SAINT DENOUAL (FR)
(74) Mandataire: Novagraaf Technologies

(56) Documents cités:
- EP-A1- 0 395 457
- DE-A1- 4 308 522
- US-A1- 2014 083 648

## Description

### Domaine technique

La présente invention se rapporte au domaine des systèmes de chauffage industriels pour le chauffage de fluide en mouvement.

### Etat de la technique

De nombreuses industries utilisent des fluides chauffés pour le séchage ou la cuisson de produits, notamment dans le domaine de l'agroalimentaire ou de la chimie.

Le système de chauffage de l'invention sera présenté ici dans le cadre d'une installation de séchage par atomisation pour la production de produits secs. Dans ce type d'installation, le produit à atomiser est admis dans une chambre de séchage (ou tour d'atomisation) sous forme d'un liquide qui est pulvérisé dans un flux d'air chaud. Au contact de l'air chaud, le liquide s'évapore en quelques secondes et les particules solides sont récupérées en sortie de chambre.

Dans ces installations, l'air admis dans la chambre de séchage est chauffé préalablement dans la conduite d'admission du flux d'air. Ce chauffage du flux d'air peut être réalisé par des résistances électriques disposées dans la conduite d'admission. Ce type de chauffage est privilégié par rapport à un brûleur qui produirait une flamme pour réchauffer le flux d'air car il ne pollue pas l'air circulant dans la conduite d'admission. En effet, la présence de résidus de combustion dans l'air admis n'est pas acceptable dans le domaine de l'agroalimentaire ou de la chimie. Par ailleurs, l'utilisation d'une flamme au contact direct de l'air à chauffer est proscrite dans certains domaines, notamment dans les tours d'atomisation pour éviter tout risque d'explosion.

L'utilisation d'un système de chauffage à résistances électriques présente toutefois un inconvénient majeur: son coût de fonctionnement est relativement élevé en raison du prix élevé du kilowatt/heure (kWh) électrique.

Il est également possible d'utiliser des échangeurs de vapeur disposés également dans le conduit d'admission. Les échangeurs de vapeur se présentent sous la forme de tube dans laquelle circule de la vapeur produite par une chaudière. Cette solution n'est pas intéressante car le rendement de tels échangeurs est faible.

Il pourrait être également envisagé d'employer des tubes radiants pour chauffer par rayonnement infrarouge le flux d'air. Dans ce type d'installation, les tubes radiants sont alimentés en gaz de combustion chauds par un brûleur. Les gaz de combustion en dépression circulent dans les tubes grâce à un extracteur disposé en aval des tubes radiants. Ce type de chauffage ne fonctionne qu'avec des tubes de faibles longueurs (quelques mètres) et ne permet pas d'obtenir des puissances de chauffe suffisantes, de l'ordre du Mégawatt, sauf à utiliser un très grand nombre de tubes radiants équipés de brûleurs. Ce type de dispositif est par exemple décrit dans le document EP 0 395 457.

### Résumé de l'invention

Un objet de l'invention est de proposer un système de chauffage d'un flux de gaz ayant un faible coût de fonctionnement et un rendement élevé.

A cet effet, l'invention propose un système de chauffage d'un flux de gaz, tel qu'un flux d'air, selon la revendication 1. Ledit flux de gaz circule dans un volume délimité en partie par une paroi, et ledit système comprend ladite paroi et une source de production de chaleur pour réchauffer ledit flux de gaz. Selon l'invention, la source de production de chaleur (3) comprend au moins une source monotubulaire à tube compact, laquelle source à tube compact comprend
- un brûleur apte à fonctionner avec des tubes immergés compacts, comprenant une chambre de combustion pour brûler un mélange air/gaz sous pression, le mélange air/gaz étant obtenu par mélange d'un air à environ 100mb avec un gaz à environ 300mb,
- un tube échangeur de chaleur apte à être placé au moins en partie dans ledit volume, ledit tube échangeur de chaleur ayant une extrémité amont raccordée à la chambre de combustion du brûleur et une extrémité aval destinée à être disposée à l'extérieur dudit volume, le tube échangeur de chaleur étant agencé dans la conduite de sorte que les gaz de combustion sous pression produits par le brûleur circulent dans le tube échangeur de chaleur pour chauffer le flux de gaz circulant dans le volume.

On propose donc selon l'invention d'employer la technique des brûleurs à Tubes Immergés Compacts (TIC) pour réchauffer principalement par convection un flux de gaz circulant dans un volume délimité par un moins une paroi, ce volume pouvant être par exemple une conduite d'admission de gaz ou une enceinte dans laquelle circule un flux de gaz. Le flux de gaz est réchauffé par les gaz de combustion sous pression (surpressés) produits par le brûleur et circulant dans un tube échangeur de chaleur. Les tubes immergés compacts étaient jusqu'à présent connus uniquement pour réchauffer un liquide par conduction.

Le flux de gaz peut être un flux d'air ou d'un mélange d'air et de gaz.

Ce système de chauffage est particulièrement économique en termes de coût de fonctionnement car le prix du kilowatt-heure produit avec du gaz est plus faible que le prix du kilowatt-heure électrique. Par ailleurs, son rendement est plus élevé que les systèmes à échangeurs de vapeur.

Par ailleurs, la flamme du brûleur n'est jamais en contact direct avec le flux de gaz à réchauffer, ce qui contribue à améliorer la sécurité de l'installation dans laquelle est placé le système de chauffage de l'invention.

Selon un mode de réalisation particulier, la source de production de chaleur comprend une pluralité de sources monotubulaires à tube compact dont les tubes compacts sont disposés les uns derrière les autres dans ledit volume pour réchauffer l'un après l'autre le flux de gaz.

Selon un mode de réalisation avantageux, le système comprend en outre une source de récupération de chaleur disposée à l'extérieur dudit volume et apte à récupérer au moins une partie de la chaleur restante dans les gaz de combustion après passage dans la conduite. Cette récupération de chaleur restante est opérée au niveau du tube d'évacuation des gaz de combustion (ou tube des fumées) de la source de chaleur à tube compact.

Selon un mode de réalisation particulier, le tube échangeur de chaleur comprenant une portion amont connectée à l'extrémité amont et disposée dans le volume et une portion aval connectée à l'extrémité aval et disposée à l'extérieur du volume, la source de récupération de chaleur comporte un réservoir de liquide froid et au moins une partie de ladite portion aval du tube échangeur de chaleur est disposée à l'intérieur du réservoir pour réchauffer le liquide froid. Ladite portion aval est la portion du tube échangeur de chaleur présente à l'extérieur du volume. Cette portion comprend le tube des fumées.

Selon un mode de réalisation avantageux, la chaleur récupérée par ladite source de récupération de chaleur est utilisée pour réchauffer, en amont de ladite au moins une source à tube compact, le flux de gaz circulant dans le volume.

Selon un mode de réalisation particulier, la source de récupération de chaleur comporte en outre une boucle de liquide en circuit fermé équipée d'un échangeur de chaleur et dans laquelle circule le liquide du réservoir, ledit échangeur de chaleur étant disposé dans ledit volume, en amont de ladite au moins une source à tube compact, pour préchauffer le flux de gaz circulant dans le volume.

Selon un mode de réalisation particulier, la portion amont du tube échangeur de chaleur se présente sous la forme d'un serpentin comprenant des brins sensiblement parallèles entre eux et reliés entre eux par des parties coudées, sensiblement en forme générale de U. Cette forme en serpentin de la portion amont du tube échangeur de chaleur permet d'avoir une surface d'échange de chaleur importante dans un volume réduit.

L'invention concerne également une installation de séchage ou de cuisson comprenant une chambre de réception et une conduite d'admission pour amener ledit flux de gaz dans la chambre de réception, et un système de chauffage pour chauffer ledit flux de gaz dans ledit volume. Selon l'invention, le système de chauffage est tel que défini précédemment.

L'invention concerne également une installation de séchage ou de cuisson comprenant une chambre de réception et une conduite d'admission pour amener ledit flux de gaz dans la chambre de réception, et un système de chauffage (1) pour chauffer ledit flux de gaz dans ladite chambre de réception. Selon l'invention, le système de chauffage est tel que défini précédemment.

Selon un mode de réalisation particulier, la chambre de réception comprend une entrée de liquide apte à asperger du liquide sur le tube échangeur de chaleur du système de chauffage pour créer de la vapeur dans ladite chambre.

D'autres avantages pourront encore apparaître à l'homme du métier à la lecture des exemples ci-dessous, illustrés par les figures annexées, donnés à titre illustratif.

### Brève description des figures

- La figure 1 représente une vue schématique d'un système de chauffage conforme à l'invention,
- La figure 2 représente une vue schématique d'une installation de séchage par atomisation comprenant le système de chauffage de la figure 1, et
- La figure 3 représente une vue schématique d'une installation de cuisson comprenant une version modifiée du système de chauffage de la figure 1.

### Description détaillée de l'invention

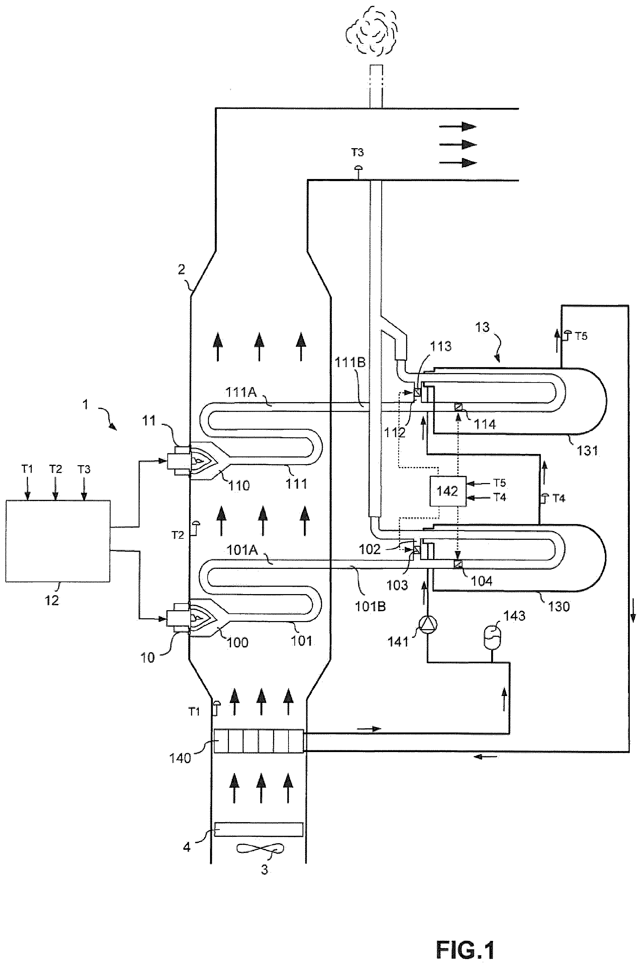

En référence à la figure 1, le système de chauffage de l'invention référencé 1 dans son ensemble comprend une ou plusieurs sources de production de chaleur à tube compact destinée(s) à réchauffer un flux d'air, ou plus généralement un flux de gaz, circulant dans une conduite 2. La conduite 2 est par exemple une conduite d'admission d'air chaud d'une installation de séchage par atomisation.

Dans l'exemple de la figure 1, le système de chauffage 1 comporte deux sources de production de chaleur à tube compact, référencées 10 et 11, dont les tubes compacts sont disposés les uns derrière les autres dans la conduite pour réchauffer principalement par convection l'un après l'autre le flux de gaz circulant dans la conduite. Bien entendu, le nombre de sources de production de chaleur à tube compact dépend de la température de flux d'air à atteindre à la sortie de la conduite.

Le flux d'air est produit par ventilateur 3 placé à proximité de l'entrée de la conduite 2. Le flux d'air entrant dans la conduite est de l'air provenant de l'extérieur. Cet air est avantageusement filtré par un filtre 4.

La structure d'une source de production de chaleur à tube compact, telle que la source de chaleur 10 ou 11, est bien connue de l'homme du métier. Ce type de source est habituellement utilisé pour la production de liquides chauds en bains, en cuves ou en ballons. Les sources de chaleur 10 et 11 comprennent chacune un brûleur, respectivement 100 et 110, et un tube échangeur de chaleur unique, respectivement 101 et 111. Le brûleur comprend une chambre de combustion dans laquelle est réalisée la combustion d'un mélange d'air comburant et de gaz combustible sous pression. Le mélange est réalisé dans une chambre de pré-mélange disposé en amont de la chambre de combustion. Dans cette chambre de pré-mélange, on mélange de l'air comburant ayant une pression d'environ 100 mb avec du gaz combustible ayant une pression d'environ 300 mb. Le mélange est homogénéisé avant combustion à travers une grille d'homogénéisation placé entre la chambre de pré-mélange et la chambre de combustion. Après combustion, les gaz chauds sous pression sortant de la chambre de combustion, appelés gaz de combustion, circulent dans le tube échangeur compact.

Les tubes échangeurs de chaleur présentent chacun une extrémité amont connectée à la chambre de combustion du brûleur et une extrémité aval par laquelle s'évacuent vers l'extérieur les gaz de combustion.

Chacun des tubes échangeurs de chaleur 101 et 111 comporte une portion amont, respectivement 101A et 111A, connectée au brûleur et disposée dans la conduite 2 et une portion aval, respectivement 101B et 111B, disposée à l'extérieur de la conduite.

Dans l'exemple de la figure 1, la portion amont, 101A et 111A, des tubes échangeurs de chaleur 10 et 11 se présente sous la forme d'un serpentin comprenant des brins sensiblement rectilignes, sensiblement parallèles entre eux, et reliés entre eux par des parties coudées, sensiblement en forme générale de U. Bien que cela ne soit pas visible sur la figure, le diamètre du serpentin diminue par paliers de son extrémité amont vers son extrémité aval pour maximiser les coefficients d'échange de chaleur. Les caractéristiques du tube échangeur de chaleur (diamètre et nombre de brins dans la portion amont) sont adaptées à la quantité de chaleur à échanger avec le flux d'air dans la conduite. Pour obtenir un échange de chaleur important, de l'ordre du Mégawatt ou plus, le tube échangeur de chaleur peut comporter un grand nombre de brins de géométrie variable en fonction de l'implantation dans le volume à chauffer. La portion amont 101A et 111A peut ainsi atteindre plusieurs dizaines de mètres sans que cela ne pose de problème de perte de charge.

Selon l'invention, les gaz de combustion surpressés produits par les sources de chaleur 10 et 11 chauffent par convection le flux d'air dans la conduite par échange de chaleur au travers de la portion amont des tubes compact 101 et 111. La chambre de combustion est avantageusement disposée dans la conduite 2 et contribue également à réchauffer le flux d'air circulant dans la conduite. L'utilisation de gaz de combustion surpressés permet de travailler avec des longueurs de tube échangeur de chaleur très importantes (plusieurs dizaines de mètres).

Selon l'invention, les gaz de combustion ne sont pas mélangés au flux d'air à chauffer et ne pollue donc pas celui-ci. Par ailleurs, la flamme nécessaire à la combustion n'est pas en contact direct avec le flux d'air de la conduite pour éviter toute propagation de flammèche dans la conduite et tout risque d'explosion. Les sources de chaleur 10 et 11 sont commandés par un circuit de commande 12 pour atteindre la température désirée en sortie de conduite.

A cet effet, de nombreux capteurs de température sont prévus pour mesurer la température du flux d'air en différents points de la conduite. Un capteur de mesure de température est installé dans la conduite pour mesurer la température T1 du flux d'air en amont de la source de chaleur 10. Un deuxième capteur est prévu pour mesurer la température T2 du flux d'air entre les deux sources de chaleur 10 et 11. Et un troisième capteur est prévu pour mesurer la température T3 du flux d'air en aval de la source de chaleur 11, de préférence à la sortie de la conduite 2. Les températures T1, T2 et T3 sont alors employées par le circuit de commande 12 pour commander les sources de chaleur 10 et 11.

A noter que, selon la température à atteindre en sortie de conduite, les deux sources production de de chaleur peuvent fonctionner simultanément ou l'une après l'autre. On peut aussi prévoir que l'une des sources de production de chaleur, dite source principale, fonctionne en permanence, l'autre source étant alors une source de secours qui est mis en fonctionnement en cas de défaillance de la source principale.

Comme montré sur la figure 1, le système de l'invention comprend en outre avantageusement au moins une source de récupération de chaleur 13 destinée à être disposée à l'extérieur de la conduite 2 et à récupérer au moins une partie de la chaleur restante dans les gaz de combustion produits par les source de production de chaleur 10 et 11 après passage dans la conduite.

Dans le mode de réalisation illustré, la source de récupération de chaleur 13 comporte deux réservoirs 130 et 131 contenant du liquide froid. On entend ici par liquide froid un liquide ayant une température inférieure à la température des gaz de combustion circulant dans la portion aval 101B ou 111B des tubes échangeurs de chaleur 101 et 111.

Au moins une partie de la portion aval 101B du tube 101 est disposée à l'intérieur du réservoir 130 et est en contact avec le liquide de ce réservoir pour échanger de la chaleur avec celui-ci. De même, au moins une partie de la portion aval 111B du tube 111 est disposée à l'intérieur du réservoir 131 et est en contact avec le liquide de ce réservoir pour échanger de la chaleur avec celui-ci.

Le liquide présent à l'intérieur du réservoir 130 a pour rôle de récupérer la chaleur restante dans les gaz de combustion produits par la source de chaleur 10 avant leur évacuation vers l'extérieur. De même, le liquide présent à l'intérieur du réservoir 131 a pour rôle de récupérer la chaleur restante dans les gaz de combustion produits par la source de chaleur 11 avant leur évacuation vers l'extérieur.

Cette chaleur récupérée par le liquide des réservoirs peut être utilisée à différentes fins mais est de préférence employée pour préchauffer le flux d'air en amont de la source de chaleur 10.

A cet effet, la source de récupération de chaleur 13 comporte en outre une boucle de liquide 14 en circuit fermé connectée aux deux réservoirs 130 et 131 et équipée d'un échangeur de chaleur 140. Les réservoirs 130 et 131 sont connectés en série dans la boucle. Le même liquide circule donc à travers les deux réservoirs 130 et 131, la boucle 14 et l'échangeur de chaleur 140. La boucle 14 est par ailleurs munie d'un circulateur 141 pour faire circuler le liquide dans la boucle. Un vase d'expansion 143 est également présent dans la boucle 14 pour compenser les dilatations du liquide.

Dans ce mode de réalisation, un échange de chaleur entre les gaz de combustion de la source 10 et le liquide de la boucle est réalisé dans le réservoir 130 et un autre échange de chaleur entre les gaz de combustion de la source 11 et le liquide de la boucle est réalisé dans le réservoir 131. La chaleur récupérée par le liquide de la boucle 14 est ensuite retransférée par l'échangeur 140 au flux d'air en amont de la source de chaleur 10.

Le système comporte avantageusement un mécanisme pour empêcher la vaporisation du liquide dans la boucle 14. Dans ce mode de réalisation, il est prévu de court-circuiter la partie de la portion aval 101B ou 111B présente dans le réservoir 130 ou 131 avant que le liquide de la boucle ne passe à l'état gazeux.

A cet effet, dans la figure 1, la portion aval 101B du tube 101 est équipée d'une dérivation 102 présente à l'extérieur du réservoir 130 pour permettre l'évacuation des gaz de combustion de la source de chaleur 10 vers l'extérieur sans passer par le réservoir 130. Cette dérivation 102 est équipée d'un volet 103 pour autoriser ou non le passage des gaz de combustion dans ladite dérivation. Un volet 104 est également prévu dans la partie de la portion aval 101B présente dans le réservoir 130 pour autoriser ou non le passage des gaz de combustion de la source 10 dans ladite partie de portion aval. Les volets 103 et 104 sont ouverts en alternance.

Le volet 103 est fermé (le passage des gaz de combustion dans la dérivation 102 est alors empêché) et le volet 104 est ouvert (le passage des gaz de combustion dans la partie de tube contenue dans le réservoir est alors autorisé) lorsque la température T4 à la sortie du réservoir 130 est inférieure à la température de vaporisation Tvap du liquide dans la boucle. Tvap est de l'ordre de 100°C si le liquide de la boucle est de l'eau. A l'inverse, le volet 103 est ouvert et le volet 104 est fermé lorsque la température T4 à la sortie du réservoir 130 est supérieure ou égale à Tvap. Pour éviter tout risque de vaporisation, il est possible de fixer une température de déclenchement de l'ouverture du volet 103 plus basse, par exemple comprise entre 90°C et 100°C.

Le même mécanisme de dérivation est prévu au niveau du réservoir 131. La portion aval 111B du tube 111 est équipée d'une dérivation 112 présente à l'extérieur du réservoir 131 pour permettre l'évacuation des gaz de combustion de la source de chaleur 10 sans passer par le réservoir 130. Cette dérivation 102 est équipée d'un volet 113 pour autoriser ou non le passage des gaz de combustion dans ladite dérivation. Un volet 114 est également présent dans la partie de la portion aval 101B présente dans le réservoir 131 pour autoriser ou non le passage des gaz de combustion de la source 11 dans ladite partie de portion aval.

Le volet 114 est ouvert (et le volet 113 est fermé) lorsque la température T5 à la sortie du réservoir 131 est inférieure à Tvap. A l'inverse, le volet 113 est ouvert (et le volet 114 est fermé) lorsque la température T5 à la sortie du réservoir 130 est supérieure ou égale à Tvap.

Des capteurs de température sont présents sur la boucle 14, à la sortie des réservoirs 130 et 131, pour mesurer les températures T4 et T5 et un circuit de commande 142 est prévu pour commander, comme décrit précédemment, les volets 103, 104, 113 et 114 en fonction des températures T4 et T5. Dans ce mode de réalisation, les volets 103, 104, 113 et 114 sont des volets motorisés pilotables par le circuit de commande 142.

La chaleur récupérée par le liquide de la boucle 14 est transférée au flux d'air dans la conduite 2 au moyen de l'échangeur de chaleur 140 qui est un échangeur eau/air.

Des échangeurs de chaleur supplémentaires peuvent bien entendu être rajoutés en amont ou en aval des sources de production de chaleur 10 et 11 pour augmenter la capacité de chauffe du système.

Le cout de fonctionnement d'un tel système de chauffage est particulièrement intéressant car le prix du kilowatt-heure produit en direct avec du gaz (comme c'est le cas dans la présente invention) est plus faible que le prix du kilowatt-heure produit avec de l'électricité (comme c'est le cas avec un système à résistances électriques).

Suivant la puissance et le nombre des sources de chaleur à tube compact et la présence éventuelle d'échangeurs de chaleur complémentaires, il est possible de produire un air chaud ayant une température de l'ordre de 200 ou 300°C, voire plus.

Le mode de réalisation décrit ci-dessus est donné à titre d'exemple. Il est évident pour l'homme de l'art qu'il peut être modifié, notamment quant au nombre de sources de production de chaleur à tube, à la forme des tubes compacts, à la présence ou non de système de récupération de chaleur.

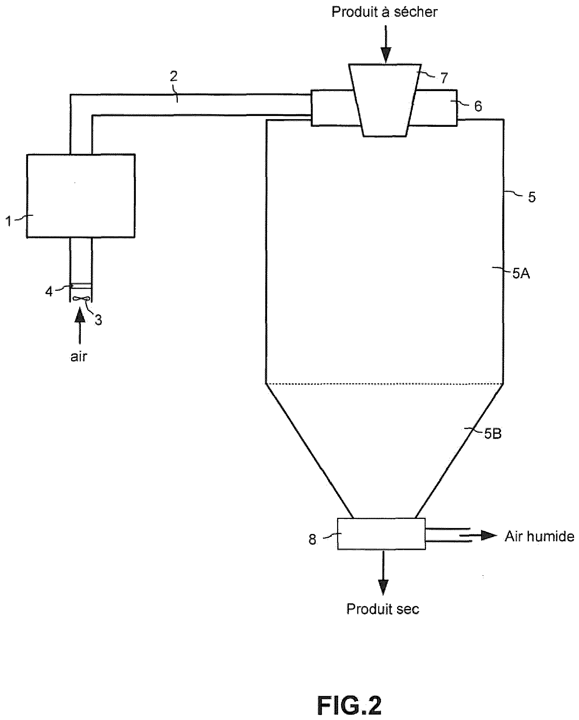

Le système de chauffage présenté à la figure 1 peut être employé dans de nombreuses installations comme par exemple dans une installation de séchage par atomisation telle qu'illustrée à la figure 2. Les références des éléments déjà présents dans la figure 1 sont reprises dans la figure 2.

En référence à la figure 2, l'installation de séchage par atomisation comprenant un ventilateur 3 pour amener un flux d'air dans une conduite 2, un système de chauffage 1 pour chauffer le flux d'air dans la conduite 2 et une chambre de séchage 5 dans laquelle le flux d'air chauffé est diffusé à travers un diffuseur 6. Le produit liquide à sécher est pulvérisé dans la chambre de séchage au moyen d'un pulvérisateur 7. Le flux d'air chaud et le produit pulvérisé sont introduits dans la chambre de séchage 5 par le haut. La chambre de séchage présente une portion supérieure 5A de forme cylindrique et une portion inférieure 5B de forme conique.

Le pulvérisateur 7 transforme le produit à sécher en un brouillard de fines gouttes. Les gouttes s'évaporent dans la chambre de séchage au contact du flux d'air chaud. Des particules de produit sec se forment et sont ensuite entrainées par le flux d'air humide vers un bloc de séparation 8 disposé à l'extrémité inférieure de la portion conique 5B. Le bloc 8 sépare les particules de produit sec de l'air humide.

L'application précédente décrit le cas où le système de chauffage est employé pour chauffer un flux de gaz dans une conduite.

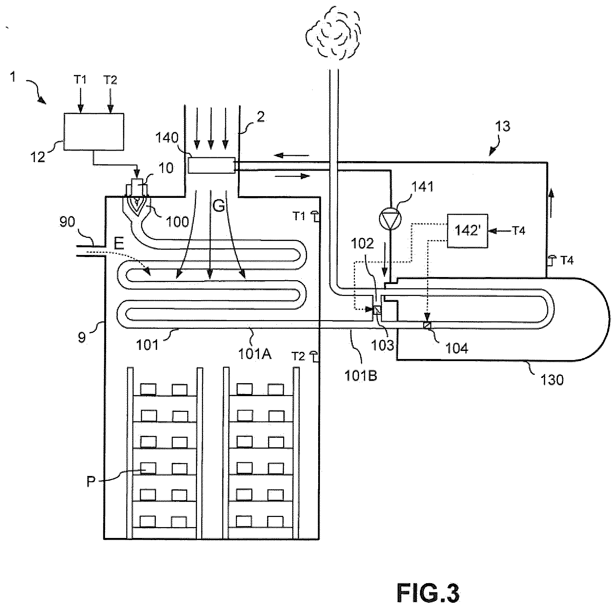

On peut envisager d'autres applications comme par exemple la cuisson de produits avec un flux de gaz circulant dans une enceinte. La figure 3 illustre un exemple d'installation de cuisson de produits alimentaires, tels que des pâtés ou des saucisses, employant le système de chauffage de l'invention.

L'installation de cuisson comprend une enceinte 3 de cuisson, une conduite d'admission d'air 2 pour amener un flux d'air dans l'enceinte et un système de chauffage 1 partiellement identique à celui présenté à la figure 1 pour chauffer le flux d'air dans l'enceinte 3. Les mêmes références ont été employées pour désigner les mêmes éléments. Dans cette installation, le système de chauffage ne comporte qu'une source de chaleur (la source de chaleur 10) et le système de récupération de chaleur 13 ne comporte qu'un seul réservoir (le réservoir 130).

La conduite d'admission d'air alimente en air G l'enceinte au niveau d'une paroi supérieure de celle-ci. Le tube échangeur de chaleur 101 de la source 10 est disposé dans la portion supérieure de l'enceinte 2' et les produits P (pâtés, saucisses,...) à cuire sont placés dans la portion inférieure de l'enceinte de sorte que le flux d'air de la conduite 2 est chauffé par le tube échangeur de chaleur 101 avant d'atteindre les pâtés P. L'air circulant dans la conduite est préchauffé par l'échangeur de chaleur 140. Ce dernier est disposé dans la conduite 2 mais, en variante, pourrait être disposé dans l'enceinte 3 en amont du tube échangeur de chaleur 101.

A noter que, pendant la cuisson, pour certains produits tels que les pâtés ou les saucisses, il est recommandé de les humidifier régulièrement pour éviter qu'ils ne craquellent. Aussi, l'enceinte est avantageusement équipée d'une entrée d'eau 4 servant à asperger régulièrement le tube échangeur de chaleur 101 avec de l'eau E pour créer, à l'intérieur de l'enceinte 3, une atmosphère humide permettant d'éviter le craquellement des produits en cours de cuisson.

## Revendications

1. Système de chauffage (1) d'un flux de gaz, tel qu'un flux d'air, circulant dans un volume (2) délimité en partie par une paroi, ledit système comprenant ladite paroi et une source de production de chaleur pour réchauffer ledit flux de gaz, la source de production de chaleur comprend au moins une source monotubulaire à tube compact (10,11), laquelle source à tube compact comprend
- un brûleur (100,110), comprenant une chambre de combustion pour brûler un mélange air/gaz sous pression,
- un tube échangeur de chaleur (101,111) apte à être placé au moins en partie dans ledit volume, ledit tube échangeur de chaleur (101,111) ayant une extrémité amont raccordée à la chambre de combustion du brûleur et une extrémité aval destinée à être disposée à l'extérieur du volume (2), le tube échangeur de chaleur (101,111) étant agencé dans la conduite de sorte que les gaz de combustion sous pression produits par le brûleur circulent dans le tube échangeur de chaleur (101,111) pour chauffer par convection le flux de gaz circulant dans le volume,
le système étant **caractérisé en ce que** le brûleur est apte à fonctionner avec des tubes immergés compacts et **en ce que** le mélange air/gaz est obtenu par mélange d'un air à environ 100 mb (10000 N/m²) avec un gaz à environ 300 mb (30000 N/m²).

2. Système selon la revendication 1, **caractérisé en ce que** la source de production de chaleur comprend une pluralité de sources à tube compact (10,11) dont les tubes compacts sont disposés les uns derrière les autres dans le volume pour réchauffer l'un après l'autre le flux de gaz.

3. Système selon la revendication 1 ou 2, **caractérisé en ce qu'**il comporte en outre une source de récupération de chaleur (13) disposée à l'extérieur du volume et apte à récupérer au moins une partie de la chaleur restante dans les gaz de combustion produits par ladite au moins une source de chaleur à tube compact (10,11) après passage dans ledit volume.

4. Système selon la revendication 3, **caractérisé en ce que** le tube échangeur de chaleur (101,111) comprend une portion amont (101A,111A) connectée à l'extrémité amont et disposée dans le volume et une portion aval (101B,111B) connectée à l'extrémité aval et disposée à l'extérieur du volume,
et **en ce que** la source de récupération de chaleur (13) comporte un réservoir (130,131) de liquide froid et **en ce qu'**au moins une partie de ladite portion aval du tube échangeur de chaleur (101,111) est disposée à l'intérieur du réservoir (130,131) pour réchauffer le liquide froid.

5. Système selon la revendication 3 ou 4, **caractérisé en ce que** la chaleur récupérée par ladite source de récupération de chaleur (13) est utilisée pour réchauffer, en amont de ladite au moins une source à tube compact (10,11), le flux de gaz circulant dans ledit volume.

6. Système selon la revendication 4 ou la revendication 5, elle-même dépendante de la revendication 4, **caractérisé en ce que** la source de récupération de chaleur (13) comporte en outre une boucle de liquide (14) en circuit fermé équipée d'un échangeur de chaleur (140) et dans laquelle circule le liquide du réservoir (130, 141), ledit échangeur de chaleur étant disposé dans ledit volume, en amont de ladite au moins une source à tube compact (10,11), pour préchauffer le flux de gaz circulant dans ledit volume.

7. Système selon la revendication 4, **caractérisé en ce que** la portion amont (101A,111A) du tube échangeur de chaleur se présente sous la forme d'un serpentin comprenant des brins sensiblement parallèles entre eux et reliés entre eux par des parties coudées, sensiblement en forme générale de U.

8. Installation de séchage ou de cuisson comprenant une chambre de réception et une conduite d'admission (2) pour amener ledit flux de gaz dans la chambre de réception, et un système de chauffage (1) pour chauffer ledit flux de gaz dans ladite conduite d'admission,
**caractérisée en ce que** le système de chauffage (1) est conforme au système selon l'une quelconque des revendications 1 à 7.

9. Installation de séchage ou de cuisson comprenant une chambre de réception et une conduite d'admission (2) pour amener ledit flux de gaz dans la chambre de réception, et un système de chauffage (1) pour chauffer ledit flux de gaz dans ladite chambre de réception,
**caractérisée en ce que** le système de chauffage (1) est conforme au système selon l'une quelconque des revendications 1 à 7.

10. Installation selon la revendication 9, **caractérisée en ce que** la chambre de réception (9) comprend une entrée de liquide (90) apte à asperger du liquide sur le tube échangeur de chaleur (101,111) du système de chauffage pour créer de la vapeur dans ladite chambre.

## Patentansprüche

1. Heizsystem (1) für einen Gasstrom, wie etwa einen Luftstrom, der in einem Volumen (2) zirkuliert, das zum Teil von einer Wand begrenzt ist, wobei das System die Wand und eine Wärmeerzeugungsquelle zum Erwärmen des Gasstroms umfasst,
wobei die Wärmeerzeugungsquelle mindestens eine einröhrige Kompaktrohrquelle (10, 11) umfasst, wobei die Kompaktrohrquelle
- einen Brenner (100, 110), der eine Brennkammer zum Verbrennen eines unter Druck stehenden Luft/GasGemischs umfasst,
- ein Wärmetauscherrohr (101, 111) umfasst, das geeignet ist, mindestens teilweise in dem Volumen platziert zu werden, wobei das Wärmetauscherrohr (101, 111) ein stromaufwärtiges Ende aufweist, das an die Brennkammer des Brenners angeschlossen ist, und eine stromabwärtiges Ende, das dazu bestimmt ist, außerhalb des Volumens (2) angeordnet zu werden, wobei sich das Wärmetauscherrohr (101, 111) in der Leitung befindet, sodass die unter Druck stehenden Brenngase, die von dem Brenner erzeugt werden, in dem Wärmetauscherrohr (101, 111) zirkulieren, um durch Konvektion den in dem Volumen zirkulierenden Gasstrom zu erwärmen,
wobei das System **dadurch gekennzeichnet ist, dass** der Brenner geeignet ist, mit eingetauchten Kompaktrohren zu funktionieren, und dadurch, dass das Luft/Gas-Gemisch erhalten wird durch Mischen einer Luft bei ungefähr 100 mb (10 000 N/m²) mit einem Gas bei ungefähr 300 mb (30 000 N/m²).

2. System nach Anspruch 1, **dadurch gekennzeichnet, dass** die Wärmeerzeugungsquelle eine Vielzahl von Kompaktrohrquellen (10, 11) umfasst, deren Kompaktrohre hintereinander in dem Volumen angeordnet sind, um nacheinander den Gasstrom zu erwärmen.

3. System nach Anspruch 1 oder 2, **dadurch gekennzeichnet, dass** es des Weiteren eine Wärmerückgewinnungsquelle (13) umfasst, die außerhalb des Volumens angeordnet und geeignet ist, mindestens einen Teil der Wärme zurückzugewinnen, die in den Brenngasen übrig ist, die von der mindestens einen Wärmequelle mit Kompaktrohr (10, 11) nach Durchlauf in dem Volumen erzeugt werden.

4. System nach Anspruch 3, **dadurch gekennzeichnet, dass** das Wärmetauscherrohr (101, 111) einen stromaufwärtigen Abschnitt (101A, 111A) umfasst, der an das stromaufwärtige Ende angeschlossen und in dem Volumen angeordnet ist, und einen stromabwärtigen Abschnitt (101B, 111B), der an das stromabwärtige Ende angeschlossen und außerhalb des Volumens angeordnet ist,
und dadurch, dass die Wärmerückgewinnungsquelle (13) einen Tank (130, 131) mit kalter Flüssigkeit umfasst, und dadurch, dass mindestens ein Teil des stromabwärtigen Abschnitts des Wärmetauscherrohrs (101, 111) innerhalb des Tanks (130, 131) angeordnet ist, um die kalte Flüssigkeit zu erwärmen.

5. System nach Anspruch 3 oder 4, **dadurch gekennzeichnet, dass** die von der Wärmerückgewinnungsquelle (13) zurückgewonnene Wärme verwendet wird, um stromaufwärts von der mindestens einen Kompaktrohrquelle (10, 11) den Gasstrom zu erwärmen, der in dem Volumen zirkuliert.

6. System nach Anspruch 4 oder Anspruch 5, der seinerseits von Anspruch 4 abhängig ist, **dadurch gekennzeichnet, dass** die Wärmerückgewinnungsquelle (13) des Weiteren eine Flüssigkeitsschleife (14) als geschlossenen Kreis umfasst, die mit einem Wärmetauscher (140) ausgestattet ist und in der die Flüssigkeit des Tanks (130, 141) zirkuliert, wobei der Wärmetauscher in dem Volumen stromaufwärts von der mindestens einen Kompaktrohrquelle (10, 11) angeordnet ist, um den Gasstrom zu erwärmen, der in dem Volumen zirkuliert.

7. System nach Anspruch 4, **dadurch gekennzeichnet, dass** sich der stromaufwärtige Abschnitt (101A, 111A) des Wärmetauscherrohrs in Form einer Wendel darstellt, die Stränge umfasst, die im Wesentlichen parallel zueinander verlaufen und durch Winkelteile, die im Wesentlichen eine allgemeine U-Form aufweisen, miteinander verbunden sind.

8. Anlage zum Trocknen oder Brennen, umfassend eine Aufnahmekammer und eine Zuführleitung (2), um den Gasstrom in die Aufnahmekammer zuzuführen, und ein Heizsystem (1) zum Heizen des Gasstroms in der Zuführleitung,
**dadurch gekennzeichnet, dass** das Heizsystem (1) dem System nach einem der Ansprüche 1 bis 7 entspricht.

9. Anlage zum Trocknen oder Brennen, umfassend eine Aufnahmekammer und eine Zuführleitung (2), um den Gasstrom in die Aufnahmekammer zuzuführen, und ein Heizsystem (1) zum Heizen des Gasstroms in der Aufnahmekammer,
**dadurch gekennzeichnet, dass** das Heizsystem (1) dem System nach einem der Ansprüche 1 bis 7 entspricht.

10. Anlage nach Anspruch 9, **dadurch gekennzeichnet, dass** die Aufnahmekammer (9) einen Flüssigkeitseintritt (90) umfasst, der geeignet ist, Flüssigkeit auf das Wärmetauscherrohr (101, 111) des Heizsystems zu spritzen, um in der Kammer Dampf zu erzeugen.

## Claims

1. A system (1) for heating a gas flow, such as an air flow, circulating in a volume (2) delimited in part by a wall, said system comprising said wall and a source for producing heat to heat said gas flow,
the heat production source comprises at least one compact tube mono-tubular source (10, 11), which compact tube source comprises
- a burner (100, 110) comprising a combustion chamber for burning a pressurised air/gas mixture,
- a heat exchanger tube (101, 111) able to be placed at least partially in said volume, said heat exchanger tube (101, 111) having an upstream end connected to the combustion chamber of the burner and a downstream end intended to be disposed outside the volume (2), the heat exchanger tube (101, 111) being arranged in the conduit so that the pressurised combustion gases produced by the burner circulate in the heat exchanger tube (101, 111) for heating by convection the gas flow circulating in the volume,
the system being **characterised in that** the burner is capable of operating with compact submerged tubes and **in that** the air/gas mixture is obtained by mixing an air at around 100 mb (10,000 N/m²) with a gas at around 300 mb (30,000 N/m²) .

2. The system according to claim 1, **characterised in that** the heat production source comprises a plurality of compact tube sources (10, 11) whose compact tubes are disposed one behind the other in the volume to heat the gas flow one after the other.

3. The system according to claim 1 or 2, **characterised in that** it further includes a heat recovery source (13) disposed outside the volume and capable of recovering at least part of the heat remaining in the combustion gases produced by said at least one compact tube heat source (10, 11) after passing through said volume.

4. The system according to claim 3, **characterised in that** the heat exchanger tube (101, 111) comprises an upstream portion (101A, 111A) connected to the upstream end and disposed in the volume and a downstream portion (101B, 111B) connected to the downstream end and disposed outside the volume,
and **in that** the heat recovery source (13) includes a cold liquid reservoir (130, 131) and **in that** at least part of said downstream portion of the heat exchanger tube (101, 111) is disposed inside the reservoir (130, 131) to heat the cold liquid.

5. The system according to claim 3 or 4, **characterised in that** the heat recovered by said heat recovery source (13) is used to heat, upstream of said at least one compact tube source (10, 11), the gas flow circulating in said volume.

6. The system according to claim 4 or claim 5, itself dependent on claim 4, **characterised in that** the heat recovery source (13) further includes a closed circuit liquid loop (14) equipped with a heat exchanger (140) and wherein the liquid from the reservoir (130, 141) circulates, said heat exchanger being disposed in said volume, upstream of said at least one compact tube source (10, 11), for preheating the gas flow circulating in said volume.

7. The system according to claim 4, **characterised in that** the upstream portion (101A, 111A) of the heat exchanger tube is in the shape of a coil comprising strands which are substantially parallel to one another and linked to each other by bent parts, substantially in the general U shape.

8. A drying or cooking installation comprising a receiving chamber and an intake conduit (2) for bringing said gas flow into the receiving chamber, and a heating system (1) for heating said gas flow in said intake conduit,
**characterised in that** the heating system (1) is in accordance with the system according to any one of claims 1 to 7.

9. The drying or cooking installation comprising a receiving chamber and an intake conduit (2) for bringing said gas flow into the receiving chamber, and a heating system (1) for heating said gas flow in said receiving chamber,
**characterised in that** the heating system (1) is in accordance with the system according to any one of claims 1 to 7.

10. The installation according to claim 9, **characterised in that** the receiving chamber (9) comprises a liquid inlet (90) capable of spraying liquid on the heat exchanger tube (101, 111) of the heating system to create steam in said chamber.
